# EUROPEAN PATENT SPECIFICATION

(11) **EP 4 534 317 B1**
(45) Date of publication and mention of the grant of the patent: **12.08.2026**
(21) Application number: 24202144.2
(22) Date of filing: 24.09.2024
(51) Int. Cl.: B60K 17/28, F16H 3/089, F16H 63/30

(54) **POWER TAKE-OFF TRANSMISSION**
ZAPFWELLENGETRIEBE
TRANSMISSION À PRISE DE FORCE

(30) Priority: 06.10.2023 NL 2035968
(43) Date of publication of application: 09.04.2025
(73) Proprietor: Emitech Holding B.V., 8307 DE Ens (NL)
(72) Inventor: De Zwaan, Gerrit, 8307 DE Ens (NL); Holtslag, Martijn, 8307 DE Ens (NL); van den Heuvel, Lennart, 8307 DE Ens (NL)
(74) Representative: Nederlandsch Octrooibureau

(56) References cited:
- EP-A2- 3 085 567
- DE-A1- 102014 013 659
- US-A1- 2007 135 260

## Description

### Field of the invention

The present invention relates to a power take-off transmission, in particular a power take-off transmission for industrial and/or argricultural vehicles.

### Background art

US patent application US 2002/043121 A1 discloses a power take off drive train for an agricultural tractor, comprising an input shaft and an output shaft, where the shafts are rotatably mounted in a transmission casing. The input shaft mounts first and second input gear wheels and a selector, wherein the gear wheels are free to rotate on the input shaft and wherein the selector is mounted on the input shaft for rotation therewith, and to slide axially along the input shaft to engage with one of the first and second gear wheels transmitting torque thereto. The output shaft mounts first and second output gear wheels fixed for rotation therewith, and wherein the first and second output gear wheels being in driving engagement with the first and second input gear wheels respectively. Another example of a power take off drive train for an agricultural tractor can be found in EP 3 085 567 A2.

German patent application DE 10 2021 209 053 A1 discloses an actuating device for a transmission element, in particular a sliding sleeve of a transmission device of a motor vehicle, comprising an actuator which is designed to move an actuating element, in particular a shift fork of the actuating device to actuate the transmission element. An output shaft of the actuating device is coupled to an eccentric shaft being mounted eccentrically in relation to the output shaft of the actuator, with a shaft section of the eccentric shaft engaging in a recess in the actuating element.

### Summary of the invention

The present invention seeks to provide an improved Power Take-Off, PTO, transmission that provides accurate and reliable operation, lower friction losses and higher efficiencies as well as reduced mechanical complexity.

According to the present invention, a PTO transmission as mentioned above is provided, comprising an input shaft rotatable around an input axis and an output shaft rotatable around an output axis, wherein the input shaft and output shaft are journalled for rotation in a casing of the PTO transmission. An input gear train is coaxially arranged on the input shaft, and an output gear train is driven by the input gear train and drives the output shaft when the PTO transmission is in operation. A synchronizer member is arranged on the input shaft and is moveable there along for connecting and disconnecting the input gear train to and from the input shaft. The PTO transmission is further provided with an electric actuator for moving the synchronizer member, and further comprises a clutch member for connecting and disconnecting the output gear train to and from the output shaft. A link arrangement mechanically connects the synchronizer member to the electric actuator, wherein the link arrangement is configured to move the synchronizer member along the input shaft in response to actuation of the electric actuator.

According to the present invention, by arranging the synchronizer member on the input shaft provides particular advantages. First, the synchronizer member allows for a smooth and seamless connection of the input shaft to the input gear train, wherein the input gear train and output gear train allow for one or more gear ratios, selectable by the synchronizer member, between the input shaft and output shaft. Second, the synchronizer member allows for the input gear train, the output gear train, the clutch member and the output shaft to remain stationary whilst the input shaft is being driven, thereby lowering friction losses of the PTO transmission significantly.

Furthermore, the electric actuator for moving the synchronizer member also provides particular advantages over e.g. conventional hydraulic actuators. For example, the electric actuator allows for programmable actuation for moving the link arrangement and hence the synchronizer member. Furthermore, the electric actuator may provide improved monitoring and/or control of actuation forces and/or actuator positions. Also, the electric actuator may allow for automated positioning calibration of the synchronizer member along the input shaft, thereby ensuring seamless and smooth connection between the input shaft and the input gear train. Moreover, the electric actuator eliminates the need for complex hydraulic actuation and hydraulic pressure and flow control.

### Short description of drawings

The present invention will be discussed in more detail below, with reference to the attached drawings, in which
Figure 1 shows a side view of a PTO transmission according to an embodiment of the present invention;
Figure 2 shows a three dimensional view of an input gear train, a synchronizer member, an output gear train, and an electric actuator according to an embodiment of the present invention;
Figure 3 shows a cross section of an input gear train, a synchronizer member, an output gear train, and a clutch member according to an embodiment of the present invention;
Figure 4 shows a three dimensional view of a link arrangement connected to an electric actuator and a synchronizer member according to an embodiment of the present invention; and
Figure 5 shows a schematic diagram of a method for operating a PTO transmission according to an embodiment of the present invention.

### Detailed description of embodiments

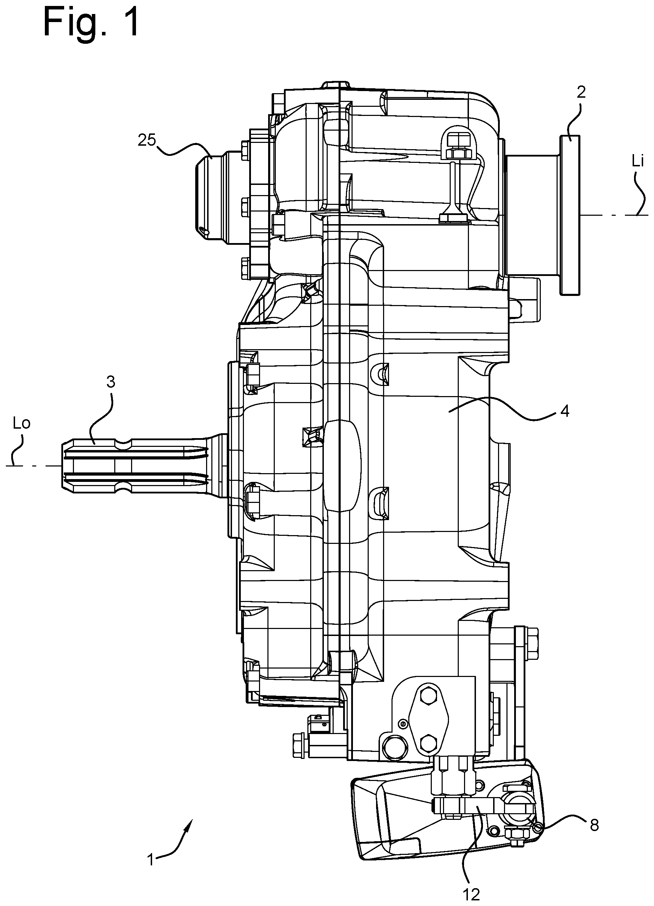

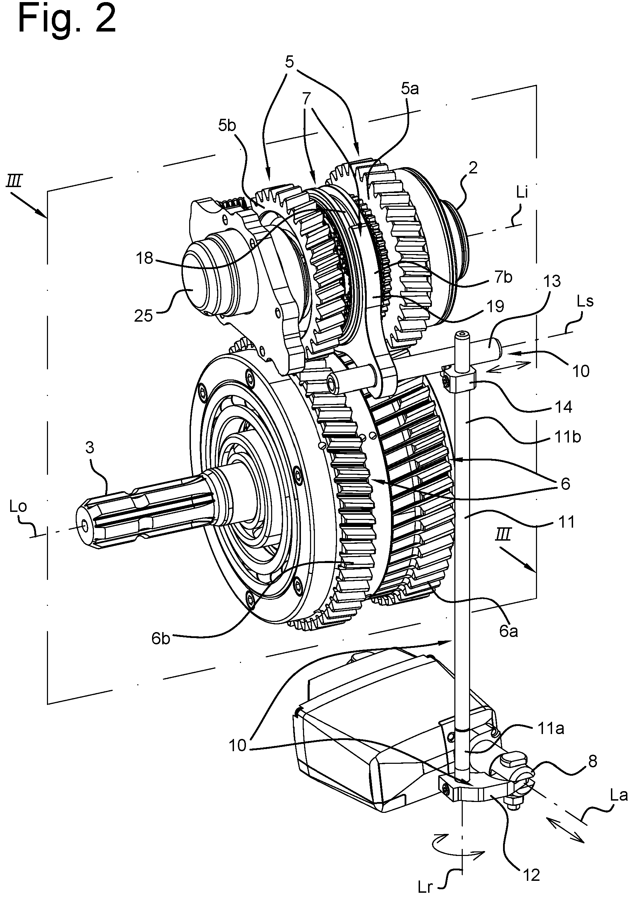

Referring to Figures 1 and 2 there is shown a power take-off, PTO, transmission 1 for a vehicle (not shown), wherein the PTO transmission 1 comprises an input shaft 2 which is rotatable around an input axis Li and an output shaft 3 which is rotatable around an output axis Lo. The input shaft 2 and output shaft 3 are journalled for rotation in a casing 4 of the PTO transmission 1. In an exemplary application of the PTO transmission 1, the input shaft 2 may be connected to an external power source such as an engine of a vehicle, and the output shaft 3 may be connected to an implement, wherein the output shaft 3 is driven by the input shaft 2 via an internal transmission arrangement of the PTO transmission 1. As shown in Figure 2, the PTO transmission 1 comprises an input gear train 5 coaxially arranged on the input shaft 2, and further comprises an output gear train 6 driven by the input gear train 5 and driving the output shaft 3 when the PTO transmission 1 is in operation.

As further depicted in Figure 2, a synchronizer member 7 is arranged on, e.g. coaxially arranged on, the input shaft 2 and is moveable or operable there along for connecting and disconnecting the input gear train 5 to and from the input shaft 2. It is noted that the synchronizer member 7 operates as a "synchronizer" or "synchromesh", which is well-known to a skilled person in the field of geared transmissions. In particular, the synchronizer member 7 acts and operates as a movable ring shaped hub device which is configured to seamlessly and smoothly equalise a rotational speed of the input gear train 5 to a rotational speed of the input shaft 2 by utilizing friction as the synchronizer member 7 moves along the input shaft 2 in axial direction. Once the rotational speeds of the input gear train 5 and input shaft 2 have equalized, the synchronizer member 7 fully engages by making a rigid connection between the input shaft 2 and the input gear train 5.

It is important to note that, within the meaning of the present invention, the synchronizer member 7 operates differently than a regular clutch, such as a multi-plate clutch, by which clutch plates are brought into friction engagement and wherein this friction engagement is solely responsible for releasably connecting two shafts, for example. Contrary to regular clutches that are fully reliant on friction only, the aforementioned rigid connection provided by the synchronizer member 7 is equivalent to the rigid connection provided by a dog clutch as widely known in the prior art, wherein shafts are connected by interlocking teeth or dogs instead of relying on friction only. Such interlocking of teeth or dogs is referred to as a rigid connection as no relative rotation or slippage between the input shaft 2 and input gear train 5 can occur once the interlocking of teeth or dogs is established. The synchronizer member 7 as utilized by the present invention operates according to known principles of a synchronizer or synchromesh by allowing interlocking of teeth or dogs in smooth manner by first matching the rotational speeds of the input shaft 2 and the input gear train 5 before interlocking of the input shaft 2 and the input gear train 5 takes place. Therefore, in contrast to a standard or regular dog clutch, the synchronizer member 7 is able to achieve the rigid connection even when the input shaft 2 and the input gear train 5 rotate relatively with respect to each other, so it is not necessary that the input shaft 2 and the input gear train 5 must be held stationary to establish the rigid connection.

Rotational speeds between the input shaft 2 and the input gear train 5 are matched by friction as the synchronizer member 7 is moved along the input shaft 2, i.e. along the input axis Li. More precisely, as the synchronizer member 7 is moved, friction engagement between the input shaft 2 and the input gear train 5 is established forcing the input gear train 5 to match its rotational speed with the rotational speed of the input shaft 2. Once rotational speeds are matched, further movement of the synchronizer member 7 causes a dog clutch connection to be established, i.e. a rigid connection of interlocking teeth of dogs. It is important to note that the aforementioned friction engagement merely serves to match rotational speeds of the input shaft 2 and the input gear train 5 and does not play a role in maintaining the rigid connection between the input shaft 2 and the input gear train 5.

Arranging the synchronizer member 7 on the input shaft 2 is particularly advantageous as the synchronizer member 7 imposes much less friction than a regular clutch, e.g. plate clutch, when the input shaft 2 is driven whilst the input gear train 5 is disconnected therefrom. Consequently, the PTO transmission 1 can be driven economically in an idle state in which the output shaft 3 need not be driven whilst the input shaft 2 is driven. Further details and exemplary embodiments of the synchronizer member 7 will be explained later.

To move or operate the synchronizer member 7 along the input shaft 2, the PTO transmission 1 comprises an electric actuator 8. Connecting and disconnecting the output gear train 6 to and from the output shaft 3 is achieved by a clutch member 9. In an engaged state of the clutch member 9, the output gear train 6 is connected to the output shaft 3. In a disengaged state of the clutch member 9, the output gear train 6 is disconnected from the output shaft 3 and as such the output shaft 3 can be held stationary whilst the output gear train 6 may still be driven.

In an embodiment, the clutch member 9 is a plate clutch member, comprising one or more plates in adjustable frictional engagement to connect and disconnect the input gear train 6 to and from the output shaft 3. In a further embodiment, the clutch member 9 is a hydraulically operated plate clutch member for hydraulically controlling the friction engagement of the clutch member 9.

The PTO transmission 1 further comprises a link arrangement 10 that mechanically connects the synchronizer member 7 to the electric actuator 8, and wherein the link arrangement 10 is configured to move the synchronizer member 7 along the input shaft 2 in response to actuation of the electric actuator 8. Therefore, the link arrangement 10 converts movement of the electric actuator 8 to movement of the synchronizer member 7. Note that the link arrangement 10 allows for any desired spatial separation between the electric actuator 8 and the synchronizer member 7, so that components of the PTO transmission 1 can be arranged in optimal fashion.

According to the present invention, by arranging the synchronizer member 7 on the input shaft 2 provides particular advantages. For example, the synchronizer member 7 allows for a smooth and seamless connection of the input shaft 2 to the input gear train 5, wherein the input gear train 5 and output gear train 6 may provide one or more gear ratios between the input shaft 2 and output shaft 3. As mentioned above, the synchronizer member 7 allows for a rigid dog clutch connection to be smoothly established when the input shaft 2 and the input gear train 5 have different rotational speeds. The one or more gear ratios may be selectable by the synchronizer member 7 depending on its axial position along the input shaft 2.

The synchronizer member 7 may be arranged to have a neutral axial position along the input shaft 2 at which the input shaft 2 and the input gear train 5 are disconnected, so wherein the input gear train 5, the output gear train 6, the clutch member 9 and the output shaft 3 may remain stationary whilst the input shaft 2 may be driven and rotate freely. By allowing the input shaft 2 to be disconnected in this way greatly lowers friction losses of the PTO transmission 1. Specifically, the releasable dog clutch connection between the input shaft 2 and the input gear train 5 as provided by the synchronizer member 7 exhibits much less friction between the input shaft 2 and the input gear train 5 in the neutral axial position as compared to a regular plate clutch for disconnecting the input shaft 2 from the input gear train 5. That is, a regular plate clutch still exhibits much higher friction losses in a disengaged state compared to a disconnected or disengaged synchronizer or synchromesh, i.e. the synchronizer member 7.

Note that when the input shaft 2 is disconnected from the input gear train 5 when the synchronizer member 7 is in the neutral axial position, the clutch member 9 may be in an engaged state when the output shaft 3 is held stationary, for example. In this case the clutch member 9 does not disconnect the input shaft 2 from the output shaft 3 as the neutral axial position of the synchronizer member 7 already disconnects the input shaft 2 from the output shaft 3. Furthermore, the synchronizer member 7 may be arranged to have a connecting axial position along the input shaft 2 at which the input shaft 2 and the input gear train 5 are connected, allowing the input shaft 2 to drive the input gear train 5, the output gear train 6, the clutch member 9 and the output shaft 3.

The electric actuator 8 of the PTO transmission 1 provides particular advantages also. For example, the electric actuator 8 allows for programmable actuation for accurately operating and moving the link arrangement 10 and hence the synchronizer member 7. Furthermore, the electric actuator 8 facilitates accurate monitoring and/or control of actuation forces and/or positions for moving the synchronizer member 7 along the input shaft 2 via the link arrangement 10. Also, the electric actuator 8 may allow for automated position calibration of the synchronizer member 7 along the input shaft 2, thereby ensuring seamless and smooth connection of the input shaft 2 to the input gear train 5. Moreover, the electric actuator 8 eliminates the need for complex hydraulic actuation and hydraulic pressure and flow control.

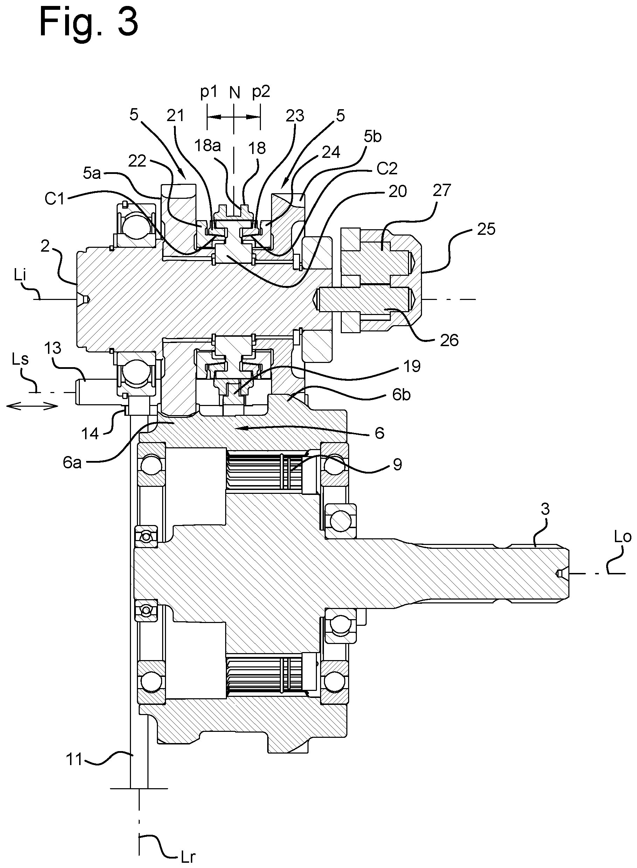

It was mentioned earlier that the input gear train 5 and output gear train 6 may provide one or more gear ratios between the input shaft 2 and output shaft 3, wherein the one or more gear ratios may be selectable by the synchronizer member 7 depending on its position along the input shaft 2. In Figure 3 there is shown a cross section of the input gear train 5, the synchronizer member 7, the output gear train 6, and the clutch member 9 of the PTO transmission 1 according to an embodiment. In the depicted embodiment the input gear train 5 may comprise a first input gear 5a and a second input gear 5b coaxially arranged on the input shaft 2, and wherein the synchronizer member 7 is arranged therebetween as shown in Figure 2. The synchronizer member 7 provides a first axial position p1 and a second axial position p2 along the input shaft 2 for connecting the input shaft 2 to the first input gear 5a and the second input gear 5b, respectively. The synchronizer member 7 further provides a third axial position N, acting as the aforementioned neutral axial position, wherein the third axial position N is arranged between the first axial position p1 and the second axial position p2 for disconnecting the first input gear 5a and the second input gear 5b from the input shaft 2. This embodiment provides a compact but effective way of providing two gear ratios at the first and second axial positions p1, p2 , and where the third axial position N acts as the neutral axial position allowing the input shaft 2 to be disconnected from the input gear train 5 such that the PTO transmission 1 exhibits minimal friction losses when the input shaft 2 is driven whilst the output shaft 3 remains stationary.

In a further embodiment, the output gear train 6 comprises a first output gear 6a in meshed engagement with the first input gear 5a, and a second output gear 6b in meshed engagement with the second input gear 5b. The first output gear 6a and the second output gear 6b are coaxially arranged on the output shaft 3 and wherein the clutch member 9 is coaxially arranged on the output shaft 3 for connecting (i.e. the engaged state) and disconnecting (i.e. the disengaged state) the first output gear 6a and the second output gear 6b from the output shaft 3. In this embodiment the clutch member 9 allows the first output gear 6a and the second output gear 6b to be simultaneously connected or disconnected to and from the output shaft 3.

When a gear ratio is selected, either through the first output gear 6a and the first input gear 5a, or the second output gear 6b and the second input gear 5b, it follows that the clutch member 9 allows the output shaft 3 to be driven at the selected gear ratio by changing the clutch member 9 from the disengaged state to the engaged state.

Referring to Figure 2, in an advantageous embodiment the electric actuator 8 is a linear actuator 8 which is linearly movable along an actuation axis La, wherein the link arrangement 10 is arranged to convert linear movement of the linear actuator 8 along the actuation axis La to movement, i.e. linear movement, of the synchronizer member 7 along the input shaft 2. The electric linear actuator 8 allows for accurate control of applied actuation speeds, forces and positions so that the synchronizer member 7 is accurately, reliably and timely positioned along the input shaft 2 for seamlessly connecting the input shaft 2 to the input gear train 5.

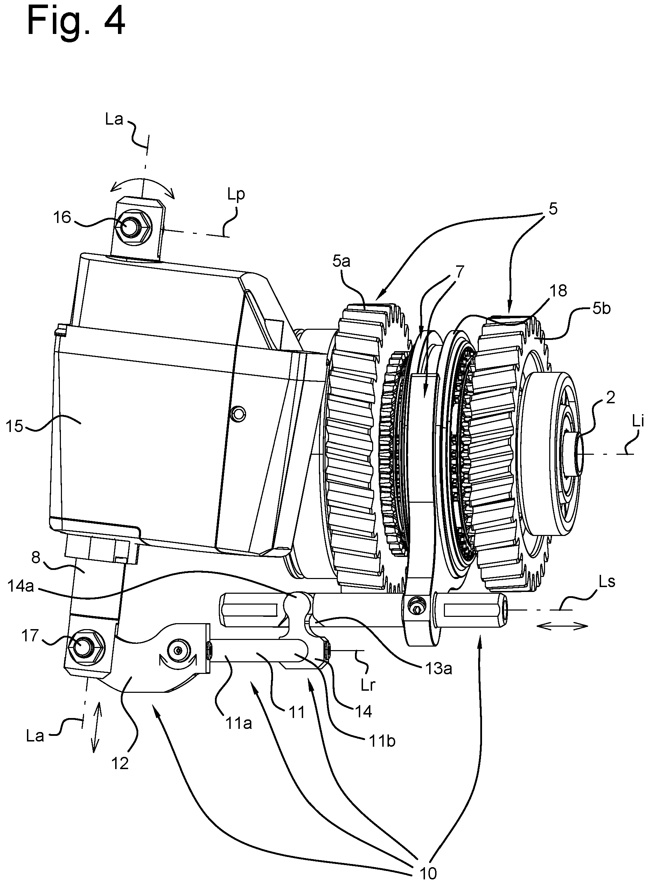

Figure 4 shows a three dimensional view of a link arrangement 10 connected to the linear electric actuator 8 and the synchronizer member 7 according to an embodiment of the present invention. This depicted embodiment exemplifies how linear movement of the linear electric actuator 8 can be converted or transferred to linear movement of the synchronizer member 7 along the input shaft 2 by virtue of the link arrangement 10. Referring to Figure 2 and 4, in an embodiment the link arrangement 10 comprises
a first rod member 11 which is rotationally arranged around a rod axis Lr,
a first lever member 12 that pivotally connects to the linear actuator 8 and is affixed to the first rod member 11 at a first rod end 11a thereof. The link arrangement 10 further comprises
a second rod member 13 which is linearly movable along a synchronizing axis Ls parallel to the input axis Li,
a second lever member 14 in movable engagement with the second rod member 13 and is affixed to the first rod member 11 at a second rod end 11b thereof, and wherein
the second rod member 13 is connected to the synchronizer member 7 for movement thereof along the input shaft 2 in response to movement of the linear actuator 8 along the actuation axis La. In this embodiment, linear movement of the linear actuator 8 can be efficiently transferred from rotational movement of the first rod member 11, the first lever member 12, and the second lever member 14 to linear movement of the second rod member 13, hence movement of the synchronizer member 7 along the input shaft 2. Advantageously, the first rod member 11 allows for a relatively large spatial separation between the synchronizer member 7 and the linear actuator 8 as rotational movement of the first rod member 11 is not influenced by its length. As a result, there is considerable freedom for placement of the linear actuator 8 with respect to the synchronizer member 7.

The movable engagement between the second lever member 14 and the second rod member 13 can be achieved in advantageous ways. For example, in Figure 4 an embodiment is shown wherein the second rod member 13 comprises a rod recess 13a and wherein the second lever member 14 comprises a cam portion 14a which is receivable in the rod recess 13a, and wherein the cam portion 14a is configured to engage the second rod member 13 for movement thereof along the synchronizing axis Ls. This exemplary embodiment provides for a simple yet effective way of converting rotational movement of the second lever member 14 to linear movement of the second rod member 13 to which the synchronizer member 7 is attached.

In a particular embodiment, the actuation axis La and the synchronizing axis Ls are perpendicular to the rod axis Lr. This allows the first lever member 12 and the second lever member 14 to rotate in respective planes that are perpendicular to the first rod member 11, and wherein these respective planes can be spatially separated by any required distance along the rod axis Lr.

In an advantageous embodiment, the first rod member 11 extends through the casing 4 and wherein the first lever member 12 and the linear actuator 8 are arranged external to the casing 4. In this embodiment the linear actuator 8 is arranged outside of the casing 4 of the PTO transmission 1, which allows the casing 4 to be smaller and or simpler design, and wherein the electric actuator 8 remains easily accessible for servicing when needed. Note that in a general embodiment, the electrical actuator 8, e.g. the linear electric actuator 8, may be arranged outside of the casing 4 by virtue of the link arrangement 10 to obtain a smaller or simpler design of the PTO transmission 1 as well as easier servicing thereof.

Further, Figure 4 shows an embodiment wherein the PTO transmission 1 comprises an actuator housing 15 and wherein the linear actuator 8 moveably extends along the actuation axis La through the actuator housing 15, and wherein the actuator housing 15 is pivotally attached to the casing 4 at a first actuator pivot point 16 and wherein the linear actuator 8 is pivotally attached to the first lever member 12 at a second actuator pivot point 17. In this embodiment the actuator housing 15 is able to rotate around the first actuator pivot point 16 in response to linear movement of the linear actuator 8 through the actuator housing 15 and as the second actuator pivot point 17 moves in circular manner in response to rotation of the first lever member 12.

As further shown in Figure 4, an embodiment is depicted wherein a pivot axis Lp of the actuator housing 15 intersects the actuator axis La. In particular, the pivot axis Lp extends through the first actuator pivot point 16 and intersects with actuator axis La. Since actuation forces, e.g. push and pull forces, exerted by the linear actuator 8 extend along the actuator axis La, such actuation forces extend through the first actuator pivot point 16 and as such the actuator housing 15 is not subjected to a clock or counter clockwise moment as the linear actuator 8 pushes or pulls the first lever member 12.

As mentioned earlier, the link arrangement 10 provides freedom as to the spatial arrangement of the linear actuator 8, e.g. the linear electric actuator 8. For example, in an embodiment the actuation axis La may be perpendicular to the input axis Li. So even though the synchronizer member 7 is movable along the input shaft 2, i.e. along the input axis Li, the link arrangement 10 allows the linear electric actuator 8 to be arranged perpendicular to the movement of the synchronizer member 7.

Referring to Figure 3, a particular embodiment of the synchronizer member 7 is depicted for further clarification. As explained above, the synchronizer member 7 acts and operates as a well-known "synchronizer" or "synchromesh" which is configured to seamlessly and smoothly equalise a rotational speed of the input gear train 5 to a rotational speed of the input shaft 2 by utilizing friction as the synchronizer member 7 moves along the input shaft 2 in axial direction.

In an exemplary embodiment, the synchronizer member 7 may comprise a shift ring 18 comprising gear teeth along its inner circumference, wherein the shift ring 18 is axially moveable along the input shaft 2. Movement of the shift ring 18 is achieved by a shift fork 19 attached to the second rod member 13 and wherein the shift fork 19 extends, in part, through a circumferential outer groove 18a of the shift ring 18. The synchronizer member 7 may further comprise an externally toothed synchronizer hub 20 arranged on the input shaft 2 through splined engagement therewith. The synchronizer hub 20 is concentrically arranged in the shift ring 18 and in meshed engagement therewith, and wherein the shift ring 18 is slidable along the synchronizer hub 20 in axial direction.

For both the first input gear 5a and the second input gear 5b there is provided an externally toothed first blocking ring 21 and an externally toothed second blocking ring 23, respectively. Each of the first blocking ring 21 and the second blocking ring 23 comprises a conical first inner surface C1 and a conical second inner surface C2 respectively. The first and second blocking ring 21, 23 are provided on either side of the shift ring 18 and the synchronizer hub 20, and each of the first and second blocking ring 21, 23 is axially movable along the input shaft 2.

Further, the first input gear 5a is provided with an externally toothed first mating gear portion 22 and the second input gear 5b is provided with an externally toothed second mating gear portion 24. The first mating gear portion 22 comprises a conical outer surface congruent with the conical first inner surface C1 for friction engagement therewith. The second mating gear portion 24 comprises a conical outer surface congruent with the conical second inner surface C2 for friction engagement therewith.

As shown in Figure 3, when the shift ring 18 moves from the third axial position N toward the first axial position p1 (left), then the first blocking ring 21 is pushed to the left, thereby intensifying friction engagement with the first mating gear portion 22 by virtue of the conical first outer surface C1. As the first mating gear portion 22 is rotationally dragged along with the first blocking ring 21, rotational speeds of the first input gear 5a and the input shaft 2 will equalize at which point the internally toothed shift ring 18 is locked into simultaneous meshed engagement with the synchronizer hub 20 and the first mating gear portion 22, comparable to a "dog clutch" engagement. As a result, a rigid connection between the input shaft 2 and the first input gear 5a is achieved.

Likewise, when the shift ring 18 moves from the third axial position N to the second axial position p2 (right), then the second blocking ring 23 is pushed to the right, thereby intensifying friction engagement with the second mating gear portion 24 by virtue of the conical second outer surface C2. As the second mating gear portion 24 is rotationally dragged along with the second blocking ring 23, rotational speeds of the second input gear 5b and the input shaft 2 will equalize at which point the internally toothed shift ring 18 is locked into simultaneous meshed engagement with the synchronizer hub 20 and the second mating gear portion 24, comparable to a "dog clutch" engagement. As a result, a rigid connection between the input shaft 2 and the second input gear 5b is achieved.

When the shift ring 18 is in the third axial position N, then there is no simultaneous meshed engagement with the synchronizer hub 20 and the first mating gear portion 22 or the second mating gear portion 24. Consequently, the input shaft 2 is disconnected from the input gear train 5, i.e. the first input gear 5a and the second input gear 5b. In the third axial position N the input shaft 2 is able to freely rotate whilst the input gear train 5 may remain stationary, thereby minimizing friction losses of the PTO transmission 1.

As mentioned above, the electric actuator 8 or linear actuator 8 circumvents the use of hydraulic actuation of the synchronizer member 7. The clutch member 9 on the other hand may still be operated through hydraulics. For example, as shown in Figures 1, 2 and 3, an embodiment may be provided wherein the PTO transmission 1 comprises a hydraulic pump 25 for operating the clutch member 9, and wherein the hydraulic pump 25 is driven by the input shaft 2 and coaxially arranged thereon. In this embodiment the hydraulic pump 25 can be efficiently driven by virtue of the coaxial arrangement of the hydraulic pump 25 on the input shaft 2, so that the use of a chain or belt is not needed, thereby keeping friction losses to a minimum when driving the hydraulic pump 25. Furthermore, by driving the hydraulic pump 25 directly by the input shaft 2 allows the clutch member 9 to be operated whilst the input gear train 5, the output gear train 6, the clutch member 9, and the output shaft 3 may remain stationary. In an exemplary embodiment as depicted, the hydraulic pump 25 may be a gear pump comprising a first pump gear 26 coaxially arranged on the input shaft 2, and a second pump gear 27 offset from the input shaft 2, i.e. input axis Li, and in meshed engagement with the first pump gear 26. In this embodiment the first pump gear 26 is coaxially mounted to the input shaft 2 and as such is directly driven thereby. The second pump gear 27 is driven by the first pump gear 26, so that the first and second pump gear 26, 27 together provide hydraulic pressure to operate the clutch member 9.

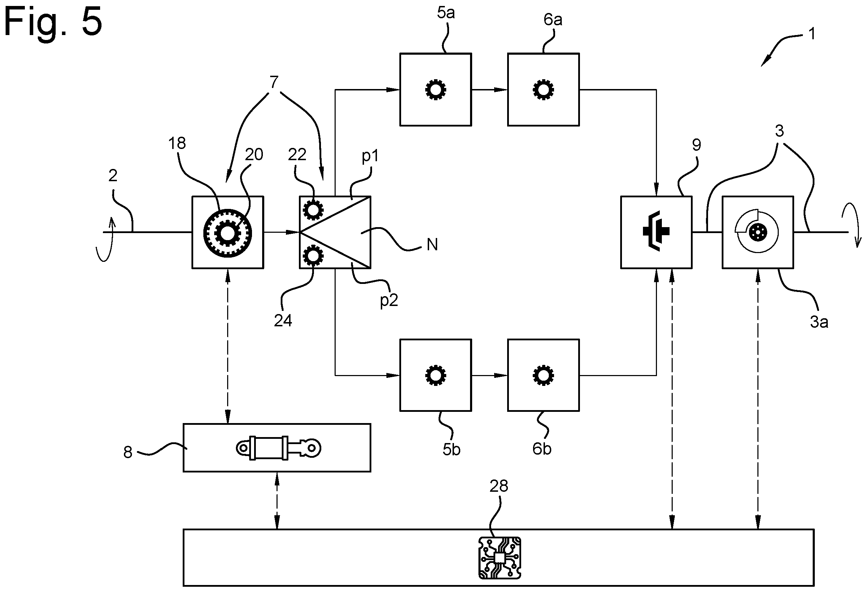

When the PTO transmission 1 is in use, the synchronizer member 7 and the clutch member 9 can be operated in a way that allows for seamless and smooth connection of the input shaft 2 to the output shaft 3 for driving an implement. For example, Figure 5 shows a schematic diagram of a method of operating the PTO transmission 1, wherein the method for operating the PTO transmission 1 may then comprise the main steps of
driving the input shaft 2 at a prescribed rotational speed;
actuating the electric actuator 8 for moving the synchronizer member 7 along the input shaft 2 from a neutral axial position (e.g. the third axial position N) at which the input gear train 5 is disconnected from the input shaft 2, to a connecting axial position (e.g. the first or second axial position p1, p2) at which the input gear train 5 is connected to the input shaft 2.

When the connection between the input shaft 2 and the input gear train 5 is established, then the method continues with the steps of
engaging the clutch member 9 for connecting the output gear train 6 to the output shaft 3.

The above method shows that the synchronizer member 7 and the clutch member 9 can be operated in a structured and reliable sequence for establishing a connection between the input shaft 2 and the input gear train 5, and ultimately between the input shaft 2 and the output shaft 3.

Figure 5 shows further schematic details of operating the synchronizer member 7 as explained earlier. The electric actuator 8 may actuate the shift ring 18, which remains in meshed engagement with the synchronizer hub 20, which in turn is connected to the input shaft 2. By axial displacement of the shift ring 18 toward the first axial position p1 or the second axial position p2 allows different gear ratios to be selected through:
simultaneous meshed engagement of the shift ring 18 with the synchronizer hub 20 and the first mating gear portion 22 of the first input gear 5a, or
simultaneous meshed engagement of the shift ring 18 with the synchronizer hub 20 and the second mating gear portion 24 of the second input gear 5b. The first input gear 5a is in constant meshed engagement with the first output gear 6a and the second input gear 5b is in constant meshed engagement with he second output gear 6b.

In an embodiment, disconnecting the input shaft 2 from the input gear train 5 involves the method steps of
disengaging the clutch member 9 for disconnecting the output gear train 6 from the output shaft 3;
actuating the electric actuator 8 for moving the synchronizer member 7 along the input shaft 2 from the connecting axial position (e.g. the first axial position p1 or the second axial position p2) to the neutral axial position (e.g. the third axial position N).

As shown in Figure 5, note that embodiments are conceivable wherein a brake member 3a may be utilized for keeping the output shaft 3 stationary when the synchronizer member 7 is operated, and wherein the brake member 3a may be used in conjunction with the clutch member 9. For example, it is conceivable that, prior to actuating the electric actuator 8 for moving the synchronizer member 7, that the clutch member 9 is disengaged for disconnecting the output shaft 3 from the output gear train 6 and then to temporarily block the output shaft 3 from rotation by activating the brake member 3a. Once the synchronizer member 7 achieves its neutral axial position or connecting axial position, then the brake member 3a may be deactivated and the clutch member 9 engaged.

It was mentioned earlier that the electric actuator 8, e.g. the linear electric actuator 8, may be configured for programmable actuation for operating the synchronizer member 7, e.g. the shift ring 18. Furthermore, the electric actuator 8 may be configured for monitoring and/or control of actuation forces applied to the synchronizer member 7. Figure 5 depicts an exemplary embodiment wherein the PTO transmission 1 may further comprise a controller 28 which is communicatively connected to the electric actuator 8 and the clutch member 9 for controlled operation thereof. For example, the controller 28 may be configured to receive measured forces and/or positions by the electric actuator 8, to process the measured forces and/or positions, and to send instructions to the electric actuator 8 and the clutch member 9 for operation thereof in a required sequency accordingly. Note that in a further embodiment the controller 28 may also be configured for (de)activating the brake member 3a for (un)blocking the output shaft 3.

When the controller 28 is communicatively connected to the electric actuator 8, then the step of actuating the electric actuator 8 for moving the synchronizer member 7 from the neutral axial position to the connecting axial position may comprise the steps of
measuring an actuating force applied by the electric actuator 8 and/or a position of the electric actuator 8; and
processing the measured actuating force and/or position by a controller 28 of he PTO transmission 1; and
based on the processed actuating force and/or position;
actuating the electric actuator 8, by the controller 28, for moving the synchronizer member 7 away from the neutral axial position until the connecting axial position is achieved as measured from the actuating force and/or position.

Conversely, in an embodiment, the step of actuating the electric actuator 8 for moving the synchronizer member 7 from the connecting axial position to the neutral axial position comprises the steps of
measuring an actuating force applied by the electric actuator 8 and/or the position of the electric actuator 8; and
processing the measured actuating force and/or position by the controller 28 of the PTO transmission 1; and
based on the processed actuating force and/or position;
actuating the electric actuator 8, by the controller 28, for moving the synchronizer member 7 away from the connecting axial position until the neutral axial position is achieved as measured from the actuating force and/or position.

Therefore, these method steps indicate that the electric actuator 8 can be accurately operated by feedback, i.e. measuring actuation forces and/or positions and processing these measured forces and/or positions by the controller 28 for operating the electric actuator 8 to achieve a desired movement of the synchronizer member 7.

## Claims

1. A power take-off, PTO, transmission (1) for a vehicle, comprising an input shaft (2) rotatable around an input axis (Li) and an output shaft (3) rotatable around an output axis (Lo), wherein the input shaft (2) and output shaft (3) are journalled for rotation in a casing (4) of the PTO transmission (1);
an input gear train (5) coaxially arranged on the input shaft (2), and an output gear train (6) driven by the input gear train (5) and driving the output shaft (3) when the PTO transmission (1) is in operation;
a clutch member (9) for connecting and disconnecting the output gear train (6) to and from the output shaft (3); **characterized in that** the PTO transmission further comprising
a synchronizer member (7) arranged on the input shaft (2) and moveable there along for connecting and disconnecting the input gear train (5) to and from the input shaft (2);
an electric actuator (8) for moving the synchronizer member (7); and
a link arrangement (10) mechanically connecting the synchronizer member (7) to the electric actuator (8), and wherein the link arrangement (10) is configured to move the synchronizer member (7) along the input shaft (2) in response to actuation of the electric actuator (8).

2. The power take-off transmission (1) according to claim 1, wherein the input gear train (5) comprises a first input gear (5a) and a second input gear (5b) coaxially arranged on the input shaft (2), wherein the synchronizer member (7) is arranged between the first input gear (5a) and the second input gear (5b), and provides
a first axial position (p1) and a second axial position (p2) along the input shaft (2) for connecting the input shaft (2) to the first input gear (5a) and the second input gear (5b), respectively, and
a third axial position (N) between the first axial position (p1) and the second axial position (p2) for disconnecting the first input gear (5a) and the second input gear (5b) from the input shaft (2).

3. The power take-off transmission (1) according to claim 2, wherein the output gear train (6) comprises a first output gear (6a) in meshed engagement with the first input gear (5a) and a second output gear (6b) in meshed engagement with the second input gear (5b), and wherein the first output gear (6a) and the second output gear (6b) are coaxially arranged on the output shaft (3); and wherein the clutch member (9) is coaxially arranged on the output shaft (3) for connecting and disconnecting the first output gear (6a) and the second output gear (6b) from the output shaft (3).

4. The power take-off transmission (1) according to any of claims 1-3, further comprising a hydraulic pump (25) for operating the clutch member (9), and wherein the hydraulic pump (25) is driven by the input shaft (2) and coaxially arranged thereon.

5. The power take-off transmission (1) according to any of claims 1-4, wherein the electric actuator (8) is a linear actuator (8) linearly movable along an actuation axis (La), and wherein the link arrangement (10) is arranged to convert linear movement of the linear actuator (8) along the actuation axis (La) to movement of the synchronizer member (7) along the input shaft (2).

6. The power take-off transmission (1) according to claim 5, wherein the link arrangement (10) comprises:
a first rod member (11) rotationally arranged around a rod axis (Lr);
a first lever member (12) pivotally connected with the linear actuator (8) and affixed to the first rod member (11) at a first rod end (11a) thereof;
a second rod member (13) linearly movable along a synchronizing axis (Ls) which is parallel to the input axis (Li);
a second lever member (14) in movable engagement with the second rod member (13) and affixed to the first rod member (11) at a second rod end (11b) thereof; and wherein the
second rod member (13) is connected to the synchronizer member (7) for movement thereof along the input shaft (2) in response to movement of the linear actuator (8) along the actuation axis (La).

7. The power take-off transmission (1) according to claim 6, wherein the second rod member (13) comprises a rod recess (13a) and wherein the second lever member (14) comprises a cam portion (14a) receivable in the rod recess (13a), wherein the cam portion (14a) is configured to engage the second rod member (13) for movement thereof along the synchronizing axis (Ls).

8. The power take-off transmission (1) according to claim 6 or 7, wherein the actuation axis (La) and synchronizing axis (Ls) are perpendicular to the rod axis (Lr).

9. The power take-off transmission (1) according to any of claims 6-8, wherein the first rod member (11) extends through the casing (4) and wherein the first lever member (12) and the linear actuator (8) are arranged external to the casing (4).

10. The power take-off transmission (1) according to any of claims 6-9, comprising an actuator housing (15) and wherein the linear actuator (8) moveably extends along the actuation axis (La) through the actuator housing (15), and wherein the actuator housing (15) is pivotally attached to the casing (4) at a first actuator pivot point (16) and wherein the linear actuator (8) is pivotally attached to the first lever member (12) at a second actuator pivot point (17).

11. The power take-off transmission (1) according to claim 10, wherein a pivot axis (Lp) of the actuator housing (15) intersects the actuator axis (La).

12. The power take-off transmission (1) according to any of claims 5-11, wherein the actuation axis (La) is perpendicular to the input axis (Li).

13. A method of operating a power take-off transmission (1) according to any of claims 1-12, comprising the steps of:
driving the input shaft (2) at a prescribed rotational speed;
actuating the electric actuator (8) for moving the synchronizer member (7) along the input shaft (2) from a neutral axial position, at which the input gear train (5) is disconnected from the input shaft (2), to a connecting axial position, at which the input gear train (5) is connected to the input shaft (2);
engaging the clutch member (9) for connecting the output gear train (6) to the output shaft (3).

14. The method according to claim 13, further comprising the steps of
disengaging the clutch member (9) for disconnecting the output gear train (6) from the output shaft (3);
actuating the electric actuator (8) for moving the synchronizer member (7) along the input shaft (2) from the connecting axial position to the neutral axial position.

15. The method according to claim 13, wherein the step of actuating the electric actuator (8) for moving the synchronizer member (7) from the neutral axial position to the connecting axial position comprises the steps of:
measuring an actuating force applied by the electric actuator (8) and/or the position of the electric actuator (8); and
processing the measured actuating force and/or position by a controller (28) of the PTO transmission (1); and
based on the processed actuating force and/or position;
actuating the electric actuator (8), by the controller (28), for moving the synchronizer member (7) away from the neutral axial position until the connecting axial position is achieved as measured from the actuating force and/or position.

16. The method according to claim 14, wherein the step of actuating the electric actuator (8) for moving the synchronizer member (7) from the connecting axial position to the neutral axial position comprises the steps of:
measuring an actuating force applied by the electric actuator (8) and/or the position of the electric actuator (8); and
processing the measured actuating force and/or position by a controller (28) of the PTO transmission (1); and
based on the processed actuating force and/or position;
actuating the electric actuator (8), by the controller (28), for moving the synchronizer member (7) away from the connecting axial position until the neutral axial position is achieved as measured from the actuating force and/or position.

## Patentansprüche

1. Nebenabtriebs(PTO)-Getriebe (1) für ein Fahrzeug, das eine um eine Eingangsachse (Li) drehbare Eingangswelle (2) und eine um eine Ausgangsachse (Lo) drehbare Ausgangswelle (3) umfasst, wobei die Eingangswelle (2) und die Ausgangswelle (3) in einem Gehäuse (4) des PTO-Getriebes (1) drehbar gelagert sind;
ein Eingangsgetriebe (5), das auf der Eingangswelle (2) koaxial angeordnet ist, und ein Ausgangsgetriebe (6), das von dem Eingangsgetriebe (5) angetrieben wird und die Ausgangswelle (3) antreibt, wenn das PTO-Getriebe (1) in Betrieb ist;
ein Kupplungselement (9) zum Verbinden und Trennen des Ausgangsgetriebes (6) mit und von der Ausgangswelle (3); **dadurch gekennzeichnet, dass** das PTO-Getriebe ferner Folgendes umfasst:
ein Synchronisationselement (7), das auf der Eingangswelle (2) angeordnet ist und entlang dieser zum Verbinden und Trennen des Eingangsgetriebes (5) mit und von der Eingangswelle (2) beweglich ist;
einen elektrischen Aktuator (8) zum Bewegen des Synchronisationselements (7); und
eine Verbindungsanordnung (10), die das Synchronisationselement (7) mit dem elektrischen Aktuator (8) mechanisch verbindet, und wobei die Verbindungsanordnung (10) so konfiguriert ist, dass sie das Synchronisationselement (7) entlang der Eingangswelle (2) als Reaktion auf die Betätigung des elektrischen Aktuators (8) bewegt.

2. Nebenabtriebsgetriebe (1) nach Anspruch 1, wobei das Eingangsgetriebe (5) ein erstes Eingangszahnrad (5a) und ein zweites Eingangszahnrad (5b) umfasst, die auf der Eingangswelle (2) koaxial angeordnet sind, wobei das Synchronisationselement (7) zwischen dem ersten Eingangszahnrad (5a) und dem zweiten Eingangszahnrad (5b) angeordnet ist und Folgendes bereitstellt:
eine erste axiale Position (p1) und eine zweite axiale Position (p2) entlang der Eingangswelle (2) zum Verbinden der Eingangswelle (2) mit dem ersten Eingangszahnrad (5a) bzw. dem zweiten Eingangszahnrad (5b), und
eine dritte axiale Position (N) zwischen der ersten axialen Position (p1) und der zweiten axialen Position (p2) zum Trennen des ersten Eingangszahnrads (5a) und des zweiten Eingangszahnrads (5b) von der Eingangswelle (2).

3. Nebenabtriebsgetriebe (1) nach Anspruch 2, wobei das Ausgangsgetriebe (6) ein erstes Ausgangszahnrad (6a) umfasst, das mit dem ersten Eingangszahnrad (5a) in kämmendem Eingriff steht, und ein zweites Ausgangszahnrad (6b), das mit dem zweiten Eingangszahnrad (5b) in kämmendem Eingriff steht, und wobei das erste Ausgangszahnrad (6a) und das zweite Ausgangszahnrad (6b) auf der Ausgangswelle (3) koaxial angeordnet sind; und wobei das Kupplungselement (9) auf der Ausgangswelle (3) koaxial angeordnet ist, um das erste Ausgangszahnrad (6a) und das zweite Ausgangszahnrad (6b) mit der Ausgangswelle (3) zu verbinden und davon zu trennen.

4. Nebenabtriebsgetriebe (1) nach einem der Ansprüche 1-3, das ferner eine Hydraulikpumpe (25) zum Betätigen des Kupplungselements (9) umfasst, und wobei die Hydraulikpumpe (25) durch die Eingangswelle (2) angetrieben wird und auf dieser koaxial angeordnet ist.

5. Nebenabtriebsgetriebe (1) nach einem der Ansprüche 1-4, wobei der elektrische Aktuator (8) ein linearer Aktuator (8) ist, der entlang einer Betätigungsachse (La) linear beweglich ist, und wobei die Verbindungsanordnung (10) so angeordnet ist, dass sie die lineare Bewegung des linearen Aktuators (8) entlang der Betätigungsachse (La) in Bewegung des Synchronisationselements (7) entlang der Eingangswelle (2) umwandelt.

6. Nebenabtriebsgetriebe (1) nach Anspruch 5, wobei die Verbindungsanordnung (10) Folgendes umfasst:
ein erstes Stabelement (11), das um eine Stabachse (Lr) drehbar angeordnet ist;
ein erstes Hebelelement (12), das mit dem linearen Aktuator (8) schwenkbar verbunden ist und an dem ersten Stabelement (11) an dessen erstem Stabende (11a) befestigt ist;
ein zweites Stabelement (13), das entlang einer Synchronisierungsachse (Ls) linear beweglich ist, die parallel zu der Eingangsachse (Li) verläuft;
ein zweites Hebelelement (14), das in beweglicher Verbindung mit dem zweiten Stabelement (13) steht und an dem ersten Stabelement (11) an dessen zweitem Stabende (11b) befestigt ist; und wobei
das zweite Stabelement (13) mit dem Synchronisationselement (7) verbunden ist, um sich entlang der Eingangswelle (2) als Reaktion auf die Bewegung des linearen Aktuators (8) entlang der Betätigungsachse (La) zu bewegen.

7. Nebenabtriebsgetriebe (1) nach Anspruch 6, wobei das zweite Stabelement (13) eine Stabaussparung (13a) umfasst und wobei das zweite Hebelelement (14) einen Nockenteil (14a) umfasst, der in der Stabaussparung (13a) aufgenommen werden kann, wobei der Nockenteil (14a) so konfiguriert ist, dass er in das zweite Stabelement (13) zu dessen Bewegung entlang der Synchronisierungsachse (Ls) eingreift.

8. Nebenabtriebsgetriebe (1) nach Anspruch 6 oder 7, wobei die Betätigungsachse (La) und die Synchronisierungsachse (Ls) senkrecht zu der Stabachse (Lr) stehen.

9. Nebenabtriebsgetriebe (1) nach einem der Ansprüche 6-8, wobei sich das erste Stabelement (11) durch das Gehäuse (4) erstreckt und wobei das erste Hebelelement (12) und der lineare Aktuator (8) außerhalb des Gehäuses (4) angeordnet sind.

10. Nebenabtriebsgetriebe (1) nach einem der Ansprüche 6-9, das ein Aktuatorgehäuse (15) umfasst, und wobei sich der lineare Aktuator (8) entlang der Betätigungsachse (La) durch das Aktuatorgehäuse (15) beweglich erstreckt, und wobei das Aktuatorgehäuse (15) an einem ersten Aktuatordrehpunkt (16) an dem Gehäuse (4) schwenkbar befestigt ist und wobei der lineare Aktuator (8) an einem zweiten Aktuatordrehpunkt (17) an dem ersten Hebelelement (12) schwenkbar befestigt ist.

11. Nebenabtriebsgetriebe (1) nach Anspruch 10, wobei eine Schwenkachse (Lp) des Aktuatorgehäuses (15) die Aktuatorachse (La) schneidet.

12. Nebenabtriebsgetriebe (1) nach einem der Ansprüche 5-11, wobei die Betätigungsachse (La) senkrecht zu der Eingangsachse (Li) steht.

13. Verfahren zum Betreiben eines Nebenabtriebsgetriebes (1) nach einem der Ansprüche 1-12, das die folgenden Schritte umfasst:
Antreiben der Eingangswelle (2) mit einer vorgegebenen Drehzahl;
Betätigen des elektrischen Aktuators (8) zum Bewegen des Synchronisationselements (7) entlang der Eingangswelle (2) von einer neutralen axialen Position, in der das Eingangsgetriebe (5) von der Eingangswelle (2) getrennt ist, in eine verbindende axiale Position, in der das Eingangsgetriebe (5) mit der Eingangswelle (2) verbunden ist;
Einrasten des Kupplungselements (9) zum Verbinden des Ausgangsgetriebes (6) mit der Ausgangswelle (3).

14. Verfahren nach Anspruch 13, das ferner die folgenden Schritte umfasst:
Auskuppeln des Kupplungselements (9) zum Trennen des Ausgangsgetriebes (6) von der Ausgangswelle (3);
Betätigen des elektrischen Aktuators (8) zum Bewegen des Synchronisationselements (7) entlang der Eingangswelle (2) von der verbindenden axialen Position in die neutrale axiale Position.

15. Verfahren nach Anspruch 13, wobei der Schritt des Betätigens des elektrischen Aktuators (8) zum Bewegen des Synchronisationselements (7) von der neutralen axialen Position in die verbindende axiale Position die folgenden Schritte umfasst:
Messen einer von dem elektrischen Aktuator ausgeübten Betätigungskraft (8) und/oder der Position des elektrischen Aktuators (8); und
Verarbeiten der gemessenen Betätigungskraft und/oder der Position durch eine Steuerungseinheit (28) des PTO-Getriebes (1); und
basierend auf der verarbeiteten Betätigungskraft und/oder der Position;
Betätigen des elektrischen Aktuators (8) durch die Steuerungseinheit (28) zum Wegbewegen des Synchronisationselements (7) aus der neutralen axialen Position, bis die verbindende axiale Position erreicht ist, gemessen anhand der Betätigungskraft und/oder der Position.

16. Verfahren nach Anspruch 14, wobei der Schritt des Betätigens des elektrischen Aktuators (8) zum Bewegen des Synchronisationselements (7) von der verbindenden axialen Position in die neutrale axiale Position die folgenden Schritte umfasst:
Messen einer von dem elektrischen Aktuator (8) ausgeübten Betätigungskraft und/oder der Position des elektrischen Aktuators (8); und
Verarbeiten der gemessenen Betätigungskraft und/oder der Position durch eine Steuerungseinheit (28) des PTO-Getriebes (1); und
basierend auf der verarbeiteten Betätigungskraft und/oder der Position;
Betätigen des elektrischen Aktuators (8) durch die Steuerungseinheit (28) zum Wegbewegen des Synchronisationselements (7) aus der verbindenden axialen Position, bis die neutrale axiale Position erreicht ist, gemessen anhand der Betätigungskraft und/oder der Position.

## Revendications

1. Transmission de prise de force, PTO, (1) pour un véhicule, comprenant un arbre d'entrée (2) rotatif autour d'un axe d'entrée (Li) et un arbre de sortie (3) rotatif autour d'un axe de sortie (Lo), où l'arbre d'entrée (2) et l'arbre de sortie (3) sont montés en rotation dans un carter (4) de la transmission de PTO (1) ;
un train d'engrenages d'entrée (5) agencé coaxialement sur l'arbre d'entrée (2), et un train d'engrenages de sortie (6) entraîné par le train d'engrenages d'entrée (5) et entraînant l'arbre de sortie (3) lorsque la transmission de PTO (1) est en fonctionnement ;
un élément d'embrayage (9) pour connecter et déconnecter le train d'engrenages de sortie (6) à et de l'arbre de sortie (3) ;
**caractérisée en ce que** la transmission de PTO comprend en outre
un élément synchroniseur (7) agencé sur l'arbre d'entrée (2) et mobile le long de celui-ci pour connecter et déconnecter le train d'engrenages d'entrée (5) à et de l'arbre d'entrée (2) ;
un actionneur électrique (8) pour déplacer l'élément synchroniseur (7) ; et
un agencement de liaison (10) connectant mécaniquement l'élément synchroniseur (7) à l'actionneur électrique (8), et où l'agencement de liaison (10) est configuré pour déplacer l'élément synchroniseur (7) le long de l'arbre d'entrée (2) en réponse à l'actionnement de l'actionneur électrique (8).

2. Transmission de prise de force (1) selon la revendication 1, où le train d'engrenages d'entrée (5) comprend un premier engrenage d'entrée (5a) et un deuxième engrenage d'entrée (5b) agencés coaxialement sur l'arbre d'entrée (2), où l'élément synchroniseur (7) est agencé entre le premier engrenage d'entrée (5a) et le deuxième engrenage d'entrée (5b), et fournit
une première position axiale (p1) et une deuxième position axiale (p2) le long de l'arbre d'entrée (2) pour connecter l'arbre d'entrée (2) au premier engrenage d'entrée (5a) et au deuxième engrenage d'entrée (5b), respectivement, et
une troisième position axiale (N) entre la première position axiale (p1) et la deuxième position axiale (p2) pour déconnecter le premier engrenage d'entrée (5a) et le deuxième engrenage d'entrée (5b) de l'arbre d'entrée (2).

3. Transmission de prise de force (1) selon la revendication 2, où le train d'engrenages de sortie (6) comprend un premier engrenage de sortie (6a) en prise engrenée avec le premier engrenage d'entrée (5a) et un deuxième engrenage de sortie (6b) en prise engrenée avec le deuxième engrenage d'entrée (5b), et où le premier engrenage de sortie (6a) et le deuxième engrenage de sortie (6b) sont agencés coaxialement sur l'arbre de sortie (3) ; et où l'élément d'embrayage (9) est agencé coaxialement sur l'arbre de sortie (3) pour connecter et déconnecter le premier engrenage de sortie (6a) et le deuxième engrenage de sortie (6b) de l'arbre de sortie (3).

4. Transmission de prise de force (1) selon l'une quelconque des revendications 1 à 3, comprenant en outre une pompe hydraulique (25) pour actionner l'élément d'embrayage (9), et où la pompe hydraulique (25) est entraînée par l'arbre d'entrée (2) et agencée coaxialement à celui-ci.

5. Transmission de prise de force (1) selon l'une quelconque des revendications 1 à 4, où l'actionneur électrique (8) est un actionneur linéaire (8) mobile de façon linéaire le long d'un axe d'actionnement (La), et où l'agencement de liaison (10) est agencé pour convertir un mouvement linéaire de l'actionneur linéaire (8) le long de l'axe d'actionnement (La) en un mouvement de l'élément synchroniseur (7) le long de l'arbre d'entrée (2).

6. Transmission de prise de force (1) selon la revendication 5, où l'agencement de liaison (10) comprend :
un premier élément de tige (11) agencé en rotation autour d'un axe de tige (Lr) ;
un premier élément de levier (12) connecté de manière pivotante à l'actionneur linéaire (8) et fixé au premier élément de tige (11) au niveau d'une première extrémité de tige (11a) de celui-ci ;
un deuxième élément de tige (13) mobile de façon linéaire le long d'un axe de synchronisation (Ls) qui est parallèle à l'axe d'entrée (Li) ;
un deuxième élément de levier (14) en prise mobile avec le deuxième élément de tige (13) et fixé au premier élément de tige (11) au niveau d'une deuxième extrémité de tige (11b) de celui-ci ; et où le deuxième élément de tige (13) est connecté à l'élément synchroniseur (7) pour permettre le déplacement de celui-ci le long de l'arbre d'entrée (2) en réponse au déplacement de l'actionneur linéaire (8) le long de l'axe d'actionnement (La).

7. Transmission de prise de force (1) selon la revendication 6, où le deuxième élément de tige (13) comprend un évidement de tige (13a) et où le deuxième élément de levier (14) comprend une portion de came (14a) pouvant être reçue dans l'évidement de tige (13a), où la portion de came (14a) est configurée pour venir en prise avec le deuxième élément de tige (13) pour permettre le déplacement de celui-ci le long de l'axe de synchronisation (Ls).

8. Transmission de prise de force (1) selon la revendication 6 ou 7, où l'axe d'actionnement (La) et l'axe de synchronisation (Ls) sont perpendiculaires à l'axe de tige (Lr).

9. Transmission de prise de force (1) selon l'une quelconque des revendications 6 à 8, où le premier élément de tige (11) s'étend à travers le carter (4) et où le premier élément de levier (12) et l'actionneur linéaire (8) sont agencés à l'extérieur du carter (4).

10. Transmission de prise de force (1) selon l'une quelconque des revendications 6 à 9, comprenant un boîtier d'actionneur (15) et où l'actionneur linéaire (8) s'étend de façon mobile le long de l'axe d'actionnement (La) à travers le boîtier d'actionneur (15), et où le boîtier d'actionneur (15) est fixé de manière pivotante au carter (4) au niveau d'un premier point de pivotement d'actionneur (16) et où l'actionneur linéaire (8) est fixé de manière pivotante au premier élément de levier (12) au niveau d'un deuxième point de pivotement d'actionneur (17).

11. Transmission de prise de force (1) selon la revendication 10, où un axe de pivotement (Lp) du boîtier d'actionneur (15) croise l'axe d'actionneur (La).

12. Transmission de prise de force (1) selon l'une quelconque des revendications 5 à 11, où l'axe d'actionnement (La) est perpendiculaire à l'axe d'entrée (Li).

13. Procédé de fonctionnement d'une transmission de prise de force (1) selon l'une quelconque des revendications 1 à 12, comprenant les étapes suivantes :
entraîner l'arbre d'entrée (2) à une vitesse de rotation prescrite ;
actionner l'actionneur électrique (8) pour déplacer l'élément synchroniseur (7) le long de l'arbre d'entrée (2) depuis une position axiale neutre, dans laquelle le train d'engrenages d'entrée (5) est déconnecté de l'arbre d'entrée (2), jusqu'à une position axiale de connexion, dans laquelle le train d'engrenages d'entrée (5) est connecté à l'arbre d'entrée (2) ;
engager l'élément d'embrayage (9) pour connecter le train d'engrenages de sortie (6) à l'arbre de sortie (3).

14. Procédé selon la revendication 13, comprenant en outre les étapes suivantes
débrayer l'élément d'embrayage (9) pour déconnecter le train d'engrenages de sortie (6) de l'arbre de sortie (3) ;
actionner l'actionneur électrique (8) pour déplacer l'élément synchroniseur (7) le long de l'arbre d'entrée (2) de la position axiale de connexion à la position axiale neutre.

15. Procédé selon la revendication 13, où l'étape d'actionnement de l'actionneur électrique (8) pour déplacer l'élément synchroniseur (7) de la position axiale neutre à la position axiale de connexion comprend les étapes suivantes :
mesurer une force d'actionnement appliquée par l'actionneur électrique (8) et/ou la position de l'actionneur électrique (8) ; et
traiter la force d'actionnement et/ou la position mesurée(s) par un contrôleur (28) de la transmission de PTO (1) ; et
en fonction de la force d'actionnement et/ou de la position traitée(s) ;
actionner l'actionneur électrique (8), par le contrôleur (28), pour éloigner l'élément synchroniseur (7) de la position axiale neutre jusqu'à ce que la position axiale de connexion soit atteinte telle que mesurée à partir de la force d'actionnement et/ou de la position.

16. Procédé selon la revendication 14, où l'étape d'actionnement de l'actionneur électrique (8) pour déplacer l'élément synchroniseur (7) de la position axiale de connexion à la position axiale neutre comprend les étapes suivantes :
mesurer une force d'actionnement appliquée par l'actionneur électrique (8) et/ou la position de l'actionneur électrique (8) ; et
traiter la force d'actionnement et/ou la position mesurée(s) par un contrôleur (28) de la transmission de PTO (1) ; et
en fonction de la force d'actionnement et/ou de la position traitée(s) ;
actionner l'actionneur électrique (8), par le contrôleur (28), pour éloigner l'élément synchroniseur (7) de la position axiale de connexion jusqu'à ce que la position axiale neutre soit atteinte telle que mesurée à partir de la force d'actionnement et/ou de la position.
